# EUROPEAN PATENT SPECIFICATION

(11) **EP 1 953 927 B1**
(45) Date of publication and mention of the grant of the patent: **04.10.2017**
(21) Application number: 06822866.7
(22) Date of filing: 02.11.2006
(51) Int. Cl.: H04W 36/00, H04W 36/30

(54) **CARRIER COMMUNICATION METHOD, PERIPHERAL CELL MEASUREMENT METHOD, BASE STATION DEVICE, AND MOBILE STATION DEVICE**
TRÄGERKOMMUNIKATIONSVERFAHREN, PERIPHERIEZELLENMESSVERFAHREN, BASISSTATIONSEINRICHTUNG UND MOBILSTATIONSEINRICHTUNG
PROCEDE DE COMMUNICATIONS AVEC PORTEUSE, PROCEDE DE MESURE DES CELLULES PERIPHERIQUES, DISPOSITIF DE STATION DE BASE, ET DISPOSITIF DE STATION MOBILE

(30) Priority: 04.11.2005 JP 2005321540
(43) Date of publication of application: 06.08.2008
(73) Proprietor: NTT DoCoMo, Inc., Chiyoda-Ku Tokyo 100-6150 (JP)
(72) Inventor: IWAMURA, Mikio, Chiyoda-ku, Tokyo 100-6150 (JP); ISHII, Minami, Chiyoda-ku, Tokyo 100-6150 (JP); NAKAMURA, Takehiro, Chiyoda-ku, Tokyo 100-6150 (JP)
(74) Representative: Hoffmann Eitle
(86) International application number: PCT/JP2006/321946
(87) International publication number: WO 2007/052735

(56) References cited:
- WO-A1-2004/025983
- WO-A2-98/59448
- JP-A- 10 013 908
- JP-A- 11 155 165
- JP-A- 2001 320 321
- JP-A- 2003 530 796
- JP-A- 2005 094 672
- US-B1- 6 792 284

## Description

### TECHNICAL FIELD

The present invention relates to a carrier information notification method, a base station and a mobile station suitable for a mobile communication system in which one or more carrier frequencies are available at each of the cells in the system.

### BACKGROUND OF THE INVENTION

Mobile communication is actualized making use of radio frequency carrier signals. In a conventional mobile communication system, a mobile station (or a mobile communication device) is measuring the carrier frequency of adjacent cells to appropriately carry out the handover process when it moves. For example, in widely used Universal Mobile Telecommunication System (UMTS) or Wideband Code Division Multiple Access (W-CDMA), the same carrier frequency is used throughout the cells in the system. Accordingly, a mobile station is handed over to the same carrier frequency of an adjacent cell when it moves across the cells. In this case, measurement for adjacent cells is simply carried out at the same carrier frequency during the handover process.

However, because frequency availability varies widely depending on countries, regions, or operators, and because further globalization is expected in the future, demand for flexible allocation of multiple carrier frequencies to radio communications is arising. Meanwhile, international standardization of Evolved-UMTS Terrestrial Radio Access (E-UTRA) is currently ongoing, and many studies and discussions are being made to standardize radio interfaces to manage and operate multiple carrier frequencies in a flexible manner. For example, in a system corresponding to E-UTRA, multiple carrier frequencies and signal bandwidths are defined so as to allow base stations or telecommunications carriers to support different carrier frequencies or different signal bandwidths. This means that the number of carrier frequencies, the center frequency of each carrier, and the signal bandwidth will vary among cells laid out by different telecommunications carriers, or among cells managed even by a single telecommunications carrier. Document WO 98/59448 discloses a method for prioritized searching of pilots signals of neighboring base stations in a CDMA communication system, in which the frequency of revisitation of a high priority neighbor's pilot is increased with respect to the lower priority neighboring pilots. The mobile station receives a neighbor list message from the base station. The neighbor list message includes pilot signal parameters for a plurality of neighboring pilot signals transmitted by neighboring base stations. A plurality of priority indications, each corresponding to one of the plurality of pilot signals is also included.

### SUMMARY OF INVENTION

### TECHNICAL PROBLEM TO BE SOLVED

If the conventional handover technique is applied as it is to a mobile communication system designed to support multiple carrier frequencies, a mobile station (or mobile communication device) has to scan the entire spectrum of the frequency band used by the system for each cell to detect one or more carrier frequencies available in that cell, and measure the propagation condition for each of the detected carrier frequencies. Because a lot of time is required for detection and measurement of carrier frequencies, the workload on the mobile station and the power consumption accompanying the carrier/cell measurement will increase. It is necessary for the mobile station to complete the measurement of the adjacent cells before the reception quality of the signal from the currently connected cell has degraded in order to appropriately carry out the handover process. If the measurement of the adjacent cells takes too much time, the communication quality is degraded, and the link may be cut off depending on the situation.

Therefore, it is an objective of the present invention to provide a mobile communication technique that can reduce the measurement workload on a mobile station and achieve effective measurement of adjacent cells to efficiently carry out the handover procedure, with a view to a mobile communication system that supports multiple carrier frequencies.

### TECHNICAL SOLUTION

To solve the above-described problem and achieve the objective, a method according to claim 1 and corresponding base station according to claim 2 and mobile station according to claim 3 are proposed.

### ADVANTAGES OF THE INVENTION

With the above-described structure, measurement for adjacent cells is carried out efficiently with reduced workload on the mobile station and reduced power consumption during the handover process. When the preferential order is determined for the measurement of carrier frequencies carried out at the mobile station, the efficiencies of adjacent-cell measurement and the handover procedure are further improved.

### BRIEF DESCRIPTION OF THE DRAWINGS

FIG. 1 is a schematic diagram illustrating an example of operations of multiple carrier frequencies.
FIG. 2 is a schematic diagram of a mobile communication system to which the present invention can be applied.
FIG. 3 is a flowchart of narrowing the carrier frequencies to be measured carried out in the mobile communication system shown in FIG. 2.
FIG. 4 illustrates an example of the carrier information generated by and transmitted from the base station to the mobile station in the mobile communication system of FIG. 2.
FIG. 5 is a block diagram illustrating the first example of the base station apparatus used in the mobile communication systems shown in FIG. 2.
FIG. 6 is a block diagram illustrating the second example of the base station apparatus used in the mobile communication system shown in FIG. 2.
FIG. 7 is a block diagram illustrating an example of the mobile station used in the mobile communication system shown in FIG. 2.

### LIST OF SYMBOLS

1-1 current cell
1-2 adjacent cell(s)
10-1.10-2 base station (base station apparatus)
12 transmission unit of base station
13 multiplexing unit of base station
14 transmission signal generator
15 preferential order determination unit
16 resource measuring unit
17 transmission buffer
18 interface (resource information acquiring unit and resource information reporting unit)
19 resource management memory
20 mobile station (mobile communication device)
24 demultiplexing unit
25 measurement control unit
26 measuring unit
27 comparison and judgment unit
28 handover determination unit
29 handover control signal generator
30 multiplexing unit of mobile station
50 network

### BEST MODE FOR IMPLEMENTING THE INVENTION

The preferred embodiments of the invention are now described in detail in conjunction with the attached drawings.

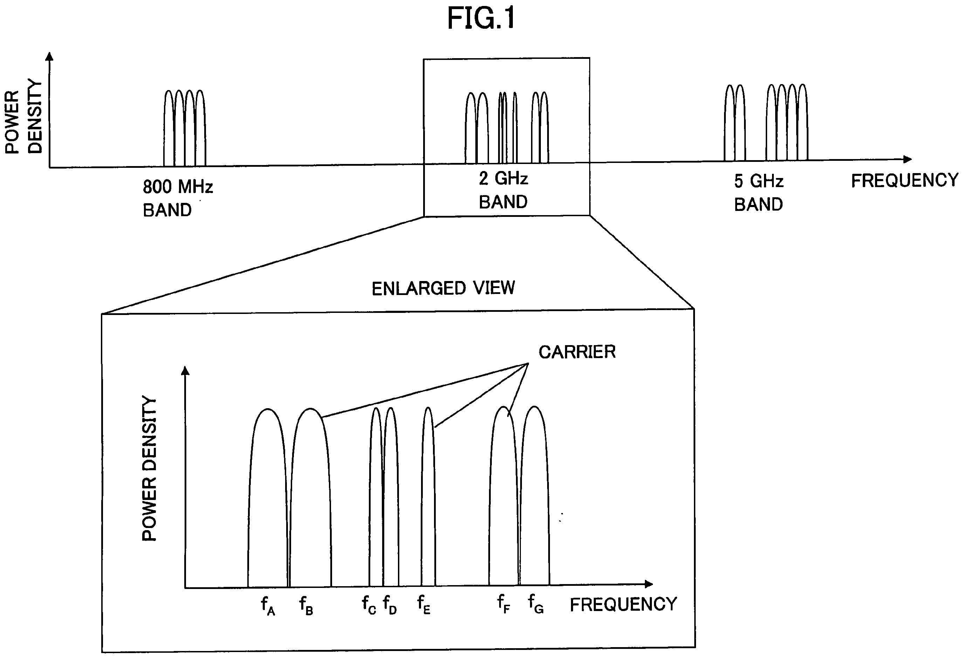

FIG. 1 illustrates an example of utilization of multiple carrier frequencies. In this example, three different frequency bands, the 80 MHz band, the 2 GHz band, and the 5 GHz band, are available in the system. In each of the frequency bands, multiple carrier frequencies can be used. The band widths of the carrier frequencies in the same band may be the same or different from one another.

Since in the conventional technique carrier frequencies available for a system are fixed and limited within a certain band, it is unnecessary for a base station to notify the mobile stations of which carrier frequencies to be used. The mobile stations can specify the carrier frequencies in advance when measuring adjacent cells. However, in the future flexible utilization and sharing of carrier frequencies, the mobile station will have to scan the entire spectrum of each of the frequency bands to discover the carrier frequencies of the adjacent cells.

To avoid the overload, the base station of each cell notifies the mobile stations of carrier information about the adjacent cells in a mobile communication system to which the present invention is applied. For a spread spectrum system, the carrier information may be supplied to the mobile stations together with the spread code required for measurement.

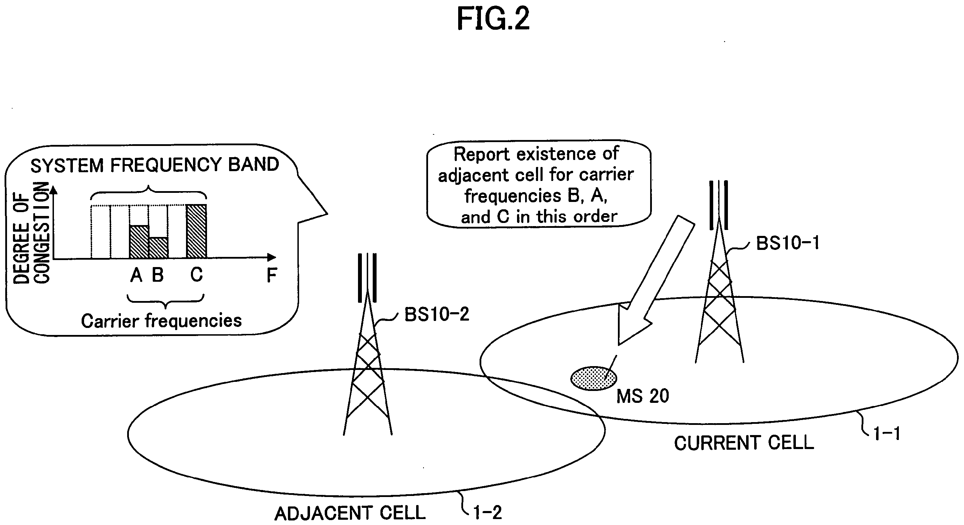

FIG. 2 is a schematic diagram of a mobile communication system according to an embodiment of the invention. A mobile station 20 is currently located in cell 1-1 and communicating with a base station 10-1. The mobile station 20 is moving toward another cell, and accordingly, carrier frequencies of adjacent cells (cell 1-2, for example) have to be measured. Although only one adjacent cell is illustrated in FIG. 2 for simplification of the figure, there are actually several cells 1-2 existing adjacent to the current cell 1-1.

The base station 10-1 notifies the mobile station 20 that, among the carrier frequencies supported by the system, carrier frequencies A, B and C are available at adjacent cell 1-2, to the mobile station 20. Currently, the degree of congestion of the carrier frequencies available in cell 1-2 is highest at carrier C, followed by carriers A and B in this order. In this case, the base station 10-1 may notify the mobile station 20 of carrier frequencies B, A and C in this order, beginning at the least congested carrier frequency. If the system employs a code spreading scheme, the spreading code required for the carrier measurement is also reported, together with the carrier information, to the mobile station 20.

Upon receiving the carrier information, the mobile station 20 carries out carrier measurement only for the carrier frequencies from the notification by base station 10-1, without scanning the entire spectra of the system frequency bands. At this stage, the carrier frequencies to be measured for the adjacent cell are narrowed to some extent. When the preferential order of the carrier frequencies to be measured for the adjacent cell 1-2 is included in the carrier information supplied from base station 10-1, the carrier frequencies to be measured can be further narrowed according to the preferential order.

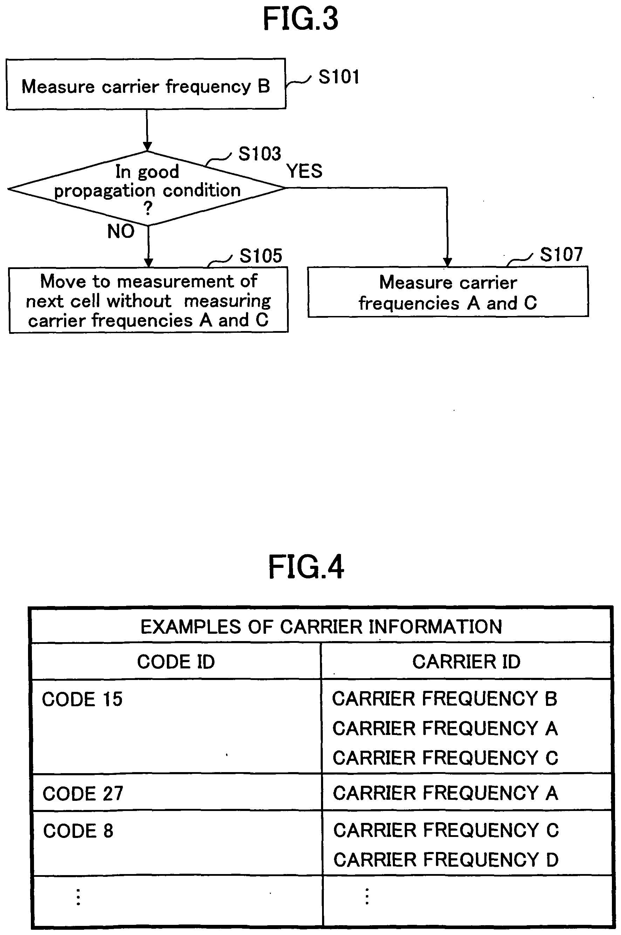

FIG. 3 is a flowchart of the carrier frequency narrowing operations carried out at the mobile station 20. Based on the carrier information supplied from the base station 10-1, measurement of carrier frequency B currently at the lowest congestion level in the adjacent cell 1-2 (in other words, at the highest preferential order of carrier measurement) is started at the mobile station 20 for the handover process (S101). Then, based on the measurement result, it is determined whether the propagation condition of carrier frequency B satisfies a predetermined condition (S103). If the predetermined condition is the power level or the signal to interference (thermal noise) ratio of the received signal, it is determined whether the measured level or value is at or above a predetermined threshold level or value. If the predetermined condition is the propagation loss, it is determined whether the measured value is at or below a predetermined threshold value.

If the propagation condition of carrier frequency B is good, satisfying the predetermined condition (YES in S103), the rest of the carrier frequencies A and C are measured consecutively, to determine the optimum carrier frequency (or the optimum combination of carrier frequencies) for telecommunications (S107). For example, when the carrier frequencies A and B satisfy the predetermined condition of the received power level or the received signal to interference (thermal noise) ratio, while carrier frequency C does not satisfy the condition, then carrier frequencies A and B are selected as being available in the adjacent cell.

If the most preferential carrier frequency B does not satisfy the predetermined condition and is not in good condition (NO in S103), the measurement for the cell 1-2 is terminated without conducting further measurement at carrier frequencies A and C, and measurement for the next adjacent cell is started (S105).

This is because if the most preferential carrier frequency does not satisfy the predetermined condition, it is unlikely that the rest of the carrier frequencies satisfy the required level. This arrangement is applicable to the case in which the preferential order information is not supplied from the base station 10-1, as long as the carrier frequencies A, B and C are in the same frequency band, because the propagation loss is expected to be substantially the same among these carrier frequencies within the same band. By measuring one of the carrier frequencies, it can be speculated that the other carrier frequencies are also in similar propagation conditions. Accordingly, the mobile station 20 measures an adjacent cell focusing on one of the carrier frequencies included in the carrier information supplied from the base station 10-1. If the propagation condition of this carrier frequency is unsatisfactory (without reaching the threshold level), no more measurement at the rest of the carrier frequencies is conducted and the measurement for the focused-on cell is terminated. With this arrangement, the quantity of measurement workload can be reduced.

As an alternative, if a carrier frequency that does not satisfy the predetermined threshold level is detected in step S107, the measurement for this adjacent cell may be terminated and the process may be returned to step S105 to move to measurement of the next adjacent cell.

FIG. 4 illustrates an example of the carrier information (which example includes adjacent-cell information as well as the preferential order information) supplied from the base station 10-1 to the mobile station 20. In this example, the available carrier frequencies included in the carrier information are rearranged according to the preferential order determined by the base station 10-1. For the mobile station 20, the cell with the code identification (ID) number 15 is the most preferential cell to access. This cell supports three carrier frequencies, among which carrier frequency B is the most preferential, then carrier frequencies A and C follow in this order. The next most preferential cell is a cell of code identification (ID) number 27, which cell supports only carrier frequency A. Then, the cell with the code ID number 8 is listed, which cell supports carrier frequencies C and D.

The mobile station 20 acquires the carrier information from the currently connected base station 10-1, and carries out measurement of carrier frequencies in the descending order of preference for each of the adjacent cells, while narrowing the number of carrier frequencies to be measure as illustrated in FIG. 3. When the measurements are finished, the cell to be accessing in the handover process and the carrier frequency used in that cell are selected based on the measurement result.

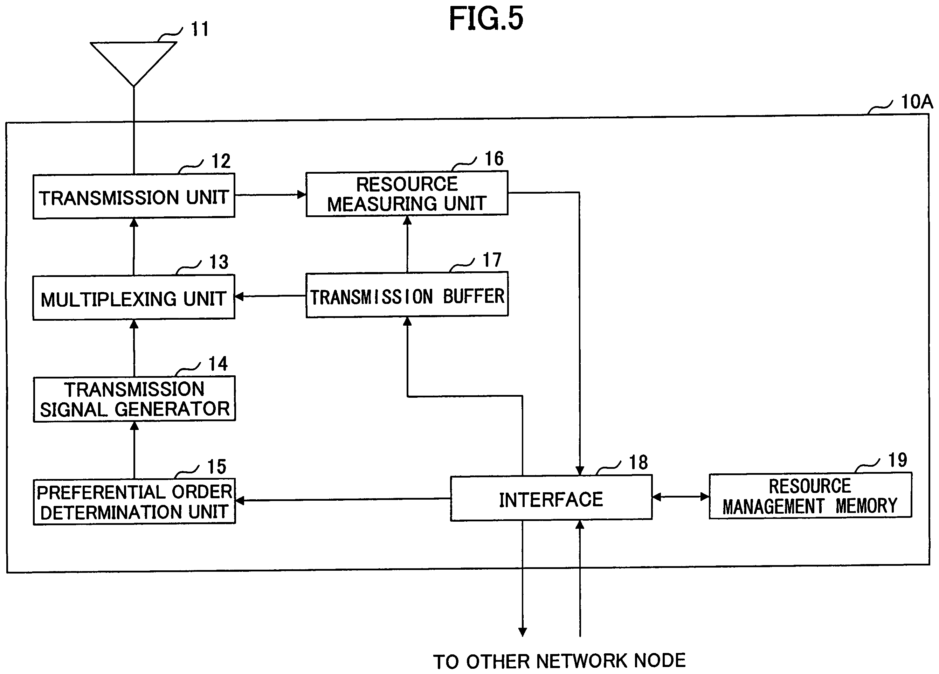

FIG. 5 is a schematic block diagram of the base station apparatus 10A which corresponds to the base station 10-1 used in the mobile communication system shown in FIG. 2. The base station 10-1 includes an antenna 11, a transmission unit 12, a multiplexing unit 13, a transmission signal generator 14, a preferential order determination unit 15, a resource measuring unit 16, a transmission buffer 17, an interface 18, and a resource management memory 19.

The transmission unit 12 encodes and modulates a signal to be transmitted, converts the encoded and modulated signal to a radio frequency (RF) signal, and excites the antenna 11 to transmit the RF signal.

The multiplexing unit 13 multiplexes notification information generated by the transmission signal generator 14 and transmission data. The notification information generated by the transmission signal generator 14 includes carrier information, and it may be referred to as carrier notification information. The carrier information may include system information and/or adjacent cell information.

The preferential order determination unit 15 acquires information about the resource utilization state (or the degree of congestion) of each of the carrier frequencies available in the corresponding cell 1-1 and the adjacent cell 1-2 from the resource management memory 19 via the interface 18 to determine the preferential order of the carrier frequencies.

The resource measuring unit 16 acquires information about the transmission power level, the number of connected users, the amount of buffered data and so on from the transmission unit 12 and the transmission buffer 17, and estimates the resource utilization state (or the degree of congestion) of each of the carrier frequencies. The transmission buffer 17 buffers transmission data received via the interface from the network. The interface 18 transmits and receives information to and from other base stations (apparatuses) 10-2 or the network. The interface 18 also reports the resource utilization state of the corresponding cell 1-1 to the base station (apparatuses) 10-2 of the adjacent cells 1-2 via the network, and receives the resource utilization state information from the adjacent cells 1-2 via the network.

The resource management memory 19 stores the resource utilization state information of the base station 10-1, as well as the resource utilization state information of the base station 10-2 of the adjacent cell 1-2 acquired via the interface 18 from the network.

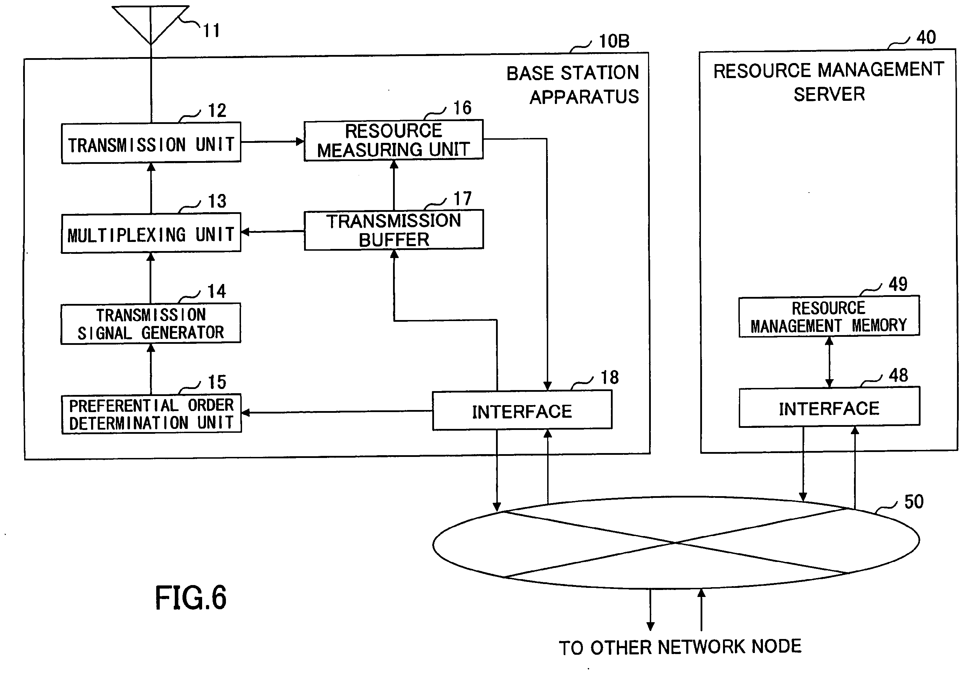

FIG. 6 is a schematic diagram illustrating a second structural example of the base station apparatus 10B corresponding to base station 10-1. In the second example, the resource management memory is not included in the base station 10-1, and instead, it is furnished in the resource management server 40 provided on the network 50. In this case, the resource utilization states of arbitrary cells 1-n (including cells 1-1 and 1-2) are collectively controlled and managed by the resource management server 40. Accordingly, the base station 10-1 acquires the information about the resource utilization state of each of the carrier frequencies of the adjacent cell 1-2 from the resource management server 40 via the network 50. The other components of the base station apparatus 10B are the same as those of the base station apparatus 10A as indicated by the same symbols, and the overlapping explanation for them is omitted.

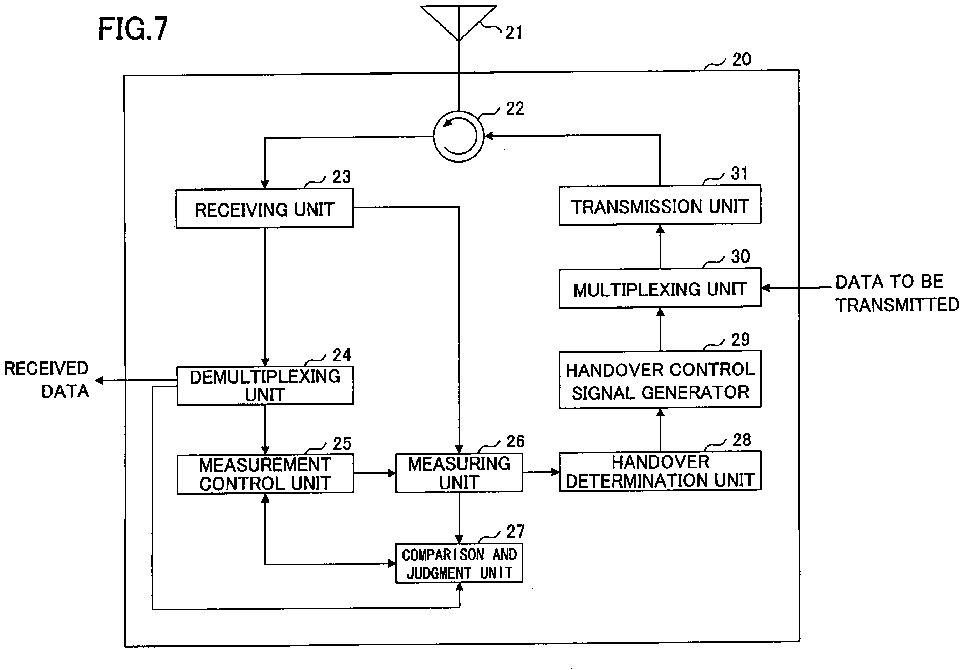

FIG. 7 is a schematic diagram of the mobile station 20 used in the mobile communication system shown in FIG. 2. The mobile station 20 includes at least an antenna 21, a circulator 22, a receiving unit 23, a demultiplexing unit 24, a measurement control unit 25, a measuring unit 26, a comparison and judgment unit 27, a handover determination unit 28, a handover control signal generator 29, a multiplexing unit 30, and a transmission unit 31.

The receiving unit 23 demodulates and decodes a received signal (containing carrier notification information) supplied from the base station 10-1 of the current cell 1-1. The demultiplexing unit 24 demultiplexes the received signal into a data component and a control signal component.

The measurement control unit 25 designates the spreading code and the carrier frequencies to be measured first at the measuring unit 26 based on the notification information received from the base station 10-1. The measurement control unit 25 also selects the spreading code and the carrier frequencies to be measured next at the measuring unit 26 based on the determination result of the comparison and judgment unit 27. In addition, the measurement control unit 25 designates a threshold value set in the comparison and judgment unit 27. If the threshold value is included in the carrier notification information, then that threshold value may be used. Alternatively, a value set in the measurement control unit 25 may be used as the threshold value.

The measuring unit 26 measures the propagation condition for the combination of the spreading code and each of the carrier frequencies designated by the measurement control unit 25.

The comparison and judgment unit 27 compares the carrier measurement result output from the measuring unit 26 with the threshold value designated by the measurement control unit 25, and returns the comparison/judging result to the measurement control unit 25. The comparison and judgment unit 27 and the measurement control unit 25 cooperate to perform the operations shown in FIG. 3 to narrow the number of carrier frequencies to be measured. If the measurement result satisfies the condition defined by the threshold value, and if there is another carrier frequency supported by the currently measured adjacent cell 1-2, then measurement of the next carrier frequency for the same cell is instructed to be performed. If the measurement result does not satisfy the condition given by the threshold value, then the measurement control unit 25 does not instruct further measurement for the currently measured cell, and instructs moving to measurement for the next adjacent cell.

The handover determination unit 28 determines implementation of handover. The handover control signal generator 29 generates a control signal for controlling the handover when it is determined by the handover determination unit 28 that handover can be implemented.

The multiplexing unit 30 multiplexes the handover control signal and the transmission data. The transmission unit 31 encodes and modulates the multiplexed signal, and converts the encoded and modulated signal to a radio frequency (RF) signal suitable for transmission from the antenna 21. The circulator 22 allows the antenna 21 to be used in common between signal receiving and signal transmission. The circulator 22 supplies the signal received at the antenna 21 to the receiving unit 23, and supplies the transmission signal output from the transmission unit 31 to the antenna 21.

With the above-described structure, the measurement load on the mobile station 20 can be reduced in the multi-carrier or multi-band environment in which multiple carrier frequencies are used in the same frequency band or across different frequency bands. This arrangement leads to prompt measurement of adjacent cells and reduced power consumption during the measurement.

When the carrier frequencies to be measured are rearranged in the preferential order, the efficiency of the measurement of adjacent cells and the handover process can be further improved.

Although the invention has been described based on the preferred examples, the invention is not limited to these examples, and many substitutions and alternations are possible for a person with an ordinary skill in the art, without departing from the scope of the present invention as defined in the appended claims.

## Claims

1. A carrier frequency notification method used in an Evolved-UMTS Terrestrial Radio Access system, in which one or more carrier frequencies are available at each of the cells in the system, comprising the steps of:
at a base station (BS10-1) in a cell (1-1), configuring a preferential order of one or more carrier frequencies available in neighboring cells (1-2) and generating carrier information about the carrier frequencies, the carrier information including the preferential order of the carrier frequencies available in the neighboring cells (1-2);
notifying a mobile station (MS 20) located in the cell (1-1) of the generated carrier information, and
at the mobile station (MS 20), measuring said one or more neighboring cells ((1-2) utilizing said one or more carrier frequencies according to the preferential order designated in the received carrier information to select a candidate cell.

2. A base station apparatus (BS10-1) used in an Evolved-UMTS Terrestrial Radio Access system, in which one or more carrier frequencies are available at each of the cells in the system, comprising:
an information acquiring unit (15) configured to acquire information about a resource utilization state of each cell of one or more carrier frequencies available at the base station (BS10-1) and neighboring cells (1-2); a preferential order configuring unit (15) configured to configure a preferential order of said one or more carrier frequencies;
a signal generator (14) configured to generate carrier information including the preferential order of the carrier frequencies; and
a transmission unit (12) configured to transmit the carrier information to a mobile station (MS 20) located in the cell (1-1) of the base station (BS10-1).

3. A mobile station (MS 20) used in an Evolved-UMTS Terrestrial Radio Access system, in which one or more carrier frequencies are available at each of the cells in the system, comprising:
a receiving unit (23) configured to receive carrier information from a base station (BS10-1), the carrier information including a preferential order of carrier frequencies available in neighboring cells (1-2) configured by the base station (BS10-1); and
a controller (25) configured to measure said one or more carrier frequencies according to the preferential order designated in the received carrier information to select a candidate cell, determine whether a measurement value of each of the carrier frequencies exceeds a predetermined level, and select a neighboring cell with the measurement value above the predetermined level as a candidate cell.

## Patentansprüche

1. Trägerfrequenz-Benachrichtigungsverfahren, das in einem E-UTRA (Evolved-UMTS Terrestrial Radio Access)-System verwendet wird, in dem eine oder mehrere Trägerfrequenzen an jeder der Zellen in dem System verfügbar sind, umfassend die Schritte von:
an einer Basisstation (BS10-1) in einer Zelle (1-1), Konfigurieren einer bevorzugten Reihenfolge von einer oder mehreren Trägerfrequenzen, die in benachbarten Zellen (1-2) verfügbar sind,
und Erzeugen von Trägerinformation über die Trägerfrequenzen, wobei die Trägerinformation die bevorzugte Reihenfolge von den Trägerfrequenzen, die in den benachbarten Zellen (1-2) verfügbar sind, aufweist;
Benachrichtigen einer in der Zelle (1-1) gelegenen Mobilstation (MS 20) von der erzeugten Trägerinformation, und,
an der Mobilstation (MS 20), Messen der einen oder der mehreren benachbarten Zellen ((1-2) unter Verwendung der einen oder der mehreren Trägerfrequenzen gemäß der in der empfangenen Trägerinformation bezeichneten bevorzugten Reihenfolge, um eine Kandidatenzelle auszuwählen.

2. Basisstationsvorrichtung (BS10-1), die in einem E-UTRA (Evolved-UMTS Terrestrial Radio Access)-System verwendet wird, in dem eine oder mehrere Trägerfrequenzen an jeder der Zellen in dem System verfügbar sind, umfassend:
eine Informationserfassungseinheit (15), die konfiguriert ist, um Information über einen Ressourcenverwendungszustand jeder Zelle von einer oder mehreren an der Basisstation (BS10-1) und benachbarten Zellen (1-2) verfügbaren Trägerfrequenzen zu erfassen;
eine Bevorzugte-Reihenfolge-Konfigurierungseinheit (15), die konfiguriert ist, um eine bevorzugte Reihenfolge der einen oder der mehreren Trägerfrequenzen zu konfigurieren;
einen Signalgenerator (14), der konfiguriert ist, um Information, die die bevorzugte Reihenfolge der Trägerfrequenzen beinhaltet, zu erzeugen; und
eine Übertragungseinheit (12), die konfiguriert ist, um die Trägerinformation zu einer in der Zelle (1-1) der Basisstation (BS10-1) gelegenen Mobilstation (MS 20) zu übertragen.

3. Mobilstation (MS 20), die in einem E-UTRA (Evolved-UMTS Terrestrial Radio Access)-System verwendet wird, in dem eine oder mehrere Trägerfrequenzen an jeder der Zellen in dem System verfügbar sind, umfassend:
eine Empfangseinheit (23), die konfiguriert ist, um Trägerinformation von einer Basisstation (BS10-1) zu empfangen, wobei die Trägerinformation eine von der Basisstation (BS10-1) konfigurierte bevorzugte Reihenfolge von in benachbarten Zellen (1-2) verfügbaren Trägerfrequenzen aufweist; und
eine Steuervorrichtung (25), die konfiguriert ist, um die eine oder die mehreren Trägerfrequenzen gemäß der in der empfangenen Trägerinformation bezeichneten bevorzugten Reihenfolge zu messen, um eine Kandidatenzelle auszuwählen, um zu bestimmen, ob ein Messwert von jeder der Trägerfrequenzen einen vorbestimmten Pegel überschreitet, und um eine benachbarte Zelle, die einen Messwert über dem vorbestimmten Pegel aufweist, als eine Kandidatenzelle auszuwählen.

## Revendications

1. Procédé de notification de fréquences porteuses utilisé dans un système d'accès radio terrestre UMTS évolué, dans lequel une ou plusieurs fréquences porteuses sont disponibles au niveau de chacune des cellules dans le système, comprenant les étapes suivantes :
au niveau d'une station de base (BS10-1) dans une cellule (1-1),
configuration d'un ordre préférentiel d'une ou plusieurs fréquences porteuses disponibles dans des cellules voisines (1-2) et génération d'informations de porteuses concernant les fréquences porteuses, les informations de porteuses comprenant l'ordre préférentiel des fréquences porteuses disponibles dans les cellules voisines (1-2) ;
notification des informations de porteuses générées à une station mobile (MS 20) située dans la cellule (1-1), et
au niveau de la station mobile (MS 20),
mesure desdites une ou plusieurs cellules voisines (1-2) en utilisant lesdites une ou plusieurs fréquences porteuses selon l'ordre préférentiel désigné dans les informations de porteuses reçues pour sélectionner une cellule candidate.

2. Dispositif de station de base (BS10-1) utilisé dans un système d'accès radio terrestre UMTS évolué, dans lequel une ou plusieurs fréquences porteuses sont disponibles au niveau de chacune des cellules dans le système, comprenant :
une unité d'acquisition d'informations (15) configurée pour acquérir des informations concernant un état d'utilisation de ressources de chaque cellule d'une ou plusieurs fréquences porteuses disponibles au niveau de la station de base (BS10-1) et des cellules voisines (1-2) ;
une unité de configuration d'ordre préférentiel (15) configurée pour configurer un ordre préférentiel desdites une ou plusieurs fréquences porteuses ;
un générateur de signal (14) configuré pour générer des informations de porteuses comprenant l'ordre préférentiel des fréquences porteuses ; et
une unité de transmission (12) configurée pour transmettre les informations de porteuses à une station mobile (MS 20) située dans la cellule (1-1) de la station de base (BS10-1).

3. Station mobile (MS 20) utilisée dans un système d'accès radio terrestre UMTS évolué, dans lequel une ou plusieurs fréquences porteuses sont disponibles au niveau de chacune des cellules dans le système, comprenant :
une unité de réception (23) configurée pour recevoir des informations de porteuses provenant d'une station de base (BS10-1), les informations de porteuses comprenant un ordre préférentiel de fréquences porteuses disponibles dans des cellules voisines (1-2) configurées par la station de base (BS10-1) ; et
un dispositif de commande (25) configuré pour mesurer lesdites une ou plusieurs fréquences porteuses selon l'ordre préférentiel désigné dans les informations de porteuses reçues pour sélectionner une cellule candidate, déterminer si une valeur de mesure de chacune des fréquences porteuses dépasse un niveau prédéterminé, et sélectionner une cellule voisine avec la valeur de mesure supérieure au niveau prédéterminé comme cellule candidate.
